Europäisches Patentamt

European Patent Office

Office européen des brevets

(11) Publication number: **0 242 338 B1**

(12) **EUROPEAN PATENT SPECIFICATION**

(45) Date of publication of patent specification: **07.11.90**

(51) Int. Cl.⁵: **B 60 K 17/08, B 60 K 17/16** .

(21) Application number: **87830137.3**

(22) Date of filing: **10.04.87**

(54) **Motor vehicle transmission system.**

(30) Priority: **15.04.86 IT 6731086**

(43) Date of publication of application:
**21.10.87 Bulletin 87/43**

(45) Publication of the grant of the patent:
**07.11.90 Bulletin 90/45**

(84) Designated Contracting States:
**AT DE ES FR GB SE**

(56) References cited:
**EP-A- 30 120**
**EP-A-0 034 814**
**DE-A-2 722 902**
**FR-A-2 164 001**
**GB-A-1 162 333**
**US-A-2 480 836**

(73) Proprietor: **AMSEA S.p.A.**
**Corso Susa 20**
**I-10040 Caselette (Torino) (IT)**

(72) Inventor: **De Marchi, Angiolo**
**Via S.Agnese 3**
**I-20123 Milano (IT)**

(74) Representative: **Buzzi, Franco et al**
**c/o Jacobacci-Casetta & Perani S.p.A. Via Alfieri,**
**17**
**I-10121 Torino (IT)**

## Description

The present invention relates to a transmission system for a front-wheel drive motor vehicle including a transverse gearbox with permanently-meshed gears and an epicyclic differential, the gearbox and the differential being interposed between the engine and the pair of front drive-shafts of the motor vehicle.

Known is in the art from EP-A-30120 a transmission system of the above-mentioned type, comprising a main shaft which receives drive from the engine and on which forward speed gears and one reverse speed gear are keyed, and a driven shaft which is parallel to the main shaft and on which there are rotatably mounted a number of forward speed gears equal to that of the gears keyed to the main shaft and meshing therewith, and a reverse speed gear for meshing with the reverse speed gear of the main shaft through a sliding idle gear. This known transmission also comprises final reduction gear means mounted on the said driven shaft, final reduction gear means fixed to the housing of the differential and meshing with the final reduction gear means mounted on the driven shaft, and coupling sleeve means slidably coupled to the driven shaft for selectively coupling for rotation with the driven shaft one of the forward speed gears meshing with the forward speed gears keyed to the main shaft.

In the above known transmission, the main shaft carries four forward speed gears meshing with four corresponding forward speed gears of the driven shaft, which are adapted to be selectively coupled for rotation therewith by means of a pair of coupling sleeves. The final reduction gear means comprise a single reduction gear permanently coupled for rotation on the driven shaft and meshing with a corresponding single final reduction gear on the housing of the differential.

Such known transmission provides therefore four forward drive speeds and one reverse drive speed, by means of a total number of ten gears (eight gearbox gears and two final reduction gears).

The object of the present invention is to provide a transmission system of the above-mentioned type which has a reduced number of gears and thus a smaller bulk and weight than similar transmission systems with the same ratios.

This reduction is obtained by virtue of the fact that the transmission system of the invention is characterised by the features recited in the characterising portion of claim 1.

By virtue of these characteristics, the transmission system of the invention has a range of performances and a compactness not found in systems used until now, in that the double reduction at the differential allows, for the same number of gears on the main shaft, double the possibilities of reduction compared with a conventional gearbox.

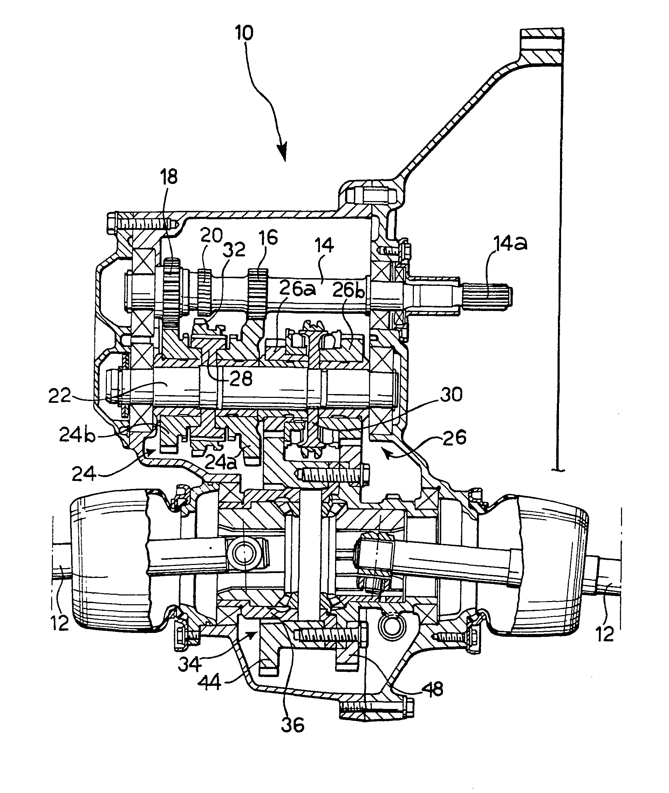

Further advantages and characteristics of the transmission system of the invention will become evident from the detailed description which follows, purely by way of non-limiting example, with reference to the appended drawing which is a sectional view of the transmission system with four ratios.

With reference to the drawing, a transmission system, generally indicated 10, is interposed between the engine of the motor vehicle (not illustrated) and drive-shafts 12 for transmitting drive to the front driving wheels of the motor vehicle (not illustrated). The system 10 includes a main shaft 14 on which are keyed a first gear 16 and a second gear 18. A gear 20 for reverse is keyed on the main shaft 14 between the gears 16 and 18. The shaft 14 receives rotational drive from the engine at one of its ends 14a with the interposition of a friction coupling (not illustrated).

Parallel to the main shaft 14, the system 10 includes a driven shaft 22 on which there are rotatably mounted a first pair 24 of adjacent gears and a second pair 26 of final reduction gears, also adjacent each other. Between the gears of the first pair 24, indicated 24a and 24b respectively, is an internally-splined coupling sleeve 28 which is keyed onto the driven shaft 22 for axial sliding. Similarly, a second internally-splined coupling sleeve 30 is axially slidably keyed onto the driven shaft 22 between the second pair of gears 26, indicated 26a and 26b respectively. The coupling sleeves 28 and 30 have, in known manner, associated forks (not illustrated) for effecting their sliding to allow the selective coupling of one of the gears of the first pair 24 and one of the gears of the second pair 26, respectively, for rotation with the driven shaft 22.

The first gear 16 and the second gear 18 of the input shaft 14 are permanently meshed with the respective gears 24a and 24b of the first pair of gears 24.

The coupling sleeve 28 is keyed externally to a ring gear 32 disposed axially in correspondence with the reverse ring gear 20.

The transmission system 10 also includes an epicyclic differential with bevel gears, generally indicated 34, including a housing or spider 36. The differential 34 drives the drive-shafts 12 in conventional manner.

To the housing 36 of the differential 34 are fixed third and fourth final reduction gears 44 and 48. The gears 44 and 48 of the housing 36 are permanently meshed with the gears 26a and 26b, respectively, of the second pair of gears 26 of the driven shaft 22.

In use of the transmission system 10, the drive is transmitted from the main shaft 14 to the driven shaft 22 selectively in correspondence with the coupling between the first gear 16 and the gear 24a of the pair 24 (first speed) or in correspondence with the coupling between the second gear 18 and the gear 24b (second speed), the drive transmission in correspondence with one or other of these gears being possible by virtue of the engagement achieved by the sliding sleeve 28.

In an entirely similar manner, the coupling sleeve 30 allows the selective transmission of drive between the driven shaft 22 and the differential 34 in correspondence with the coupling between the gears 26a and 44 (first reduced speed) or in correspondence with the coupling between the gear 26b and the corresponding gear 48 of the differential 34 (second reduced speed). The combination of the first or second speeds with the first or second reduced speeds enables a four-speed gearbox to be achieved.

In order to engage reverse, a slidable idle gear (not illustrated) is used which is adapted to mesh simultaneously with the reverse gear 20 on the main shaft 14 and the ring gear 32 keyed to the outside of the coupling sleeve 28.

It is understood that the principle of the invention remaining the same, the constructional details and forms of embodiment may be varied widely with respect to that described and illustrated in the drawing.

For example, although the invention has been described with reference to a four-speed gearbox, it can be applied to a six-speed gearbox with the use of three pairs of meshed gears carried by the main and driven shafts and selectable by two coupling sleeves, instead of two gears.

## Claim

Transmission system for front-wheel drive motor vehicles including a gearbox with permanently-meshed gears disposed transverse the longitudinal axis of the vehicle and an epicyclic differential (34), the gearbox and the differential being interposed between the engine and the pair of front drive-shafts (12) of the motor vehicle, the said gearbox including:

a main shaft (14) which receives drive from the engine and on which forward speed gears and one reverse speed gear (20) are keyed,

a driven shaft (22) which is parallel to the main shaft (14) and on which there are rotatably mounted a number of forward speed gears equal to that of the gears keyed to the main shaft (14) and meshing therewith, a reverse speed gear (32) for meshing with the said reverse speed gear (20) of the main shaft (14) through a sliding idle gear, and final reduction gear means mounted on the said driven shaft (22),

final reduction gear means fixed to the housing (36) of the differential (34) and meshing with the final reduction gear means mounted on the driven shaft (22), and

coupling sleeve means (28) slidably coupled to the driven shaft (22) for selectively coupling for rotation with the driven shaft (22) one of the forward speed gears meshing with the forward speed gears keyed to the main shaft (14), characterised in that:

the forward speed gears are constituted by a single pair of gears (16, 18) on the main shaft (14) and by a corresponding single pair (24) of gears (24a, 24b) on the driven shaft (22),

the final reduction gear means comprise a pair (26) of final reduction gears (26a, 26b) rotatably supported by the driven shaft (22) and a pair of corresponding final reduction gears (44, 48) fixed to the housing (36) of the differential (34),

the coupling sleeve means of the driven shaft (22) are constituted by a single sleeve (28) operatively associated with the said single pair of forward speed gears (24a, 24b),

a second coupling sleeve (30) is slidably coupled to the driven shaft (22) for selectively coupling for rotation therewith one of the said gears (26a, 26b) of the final reduction pair (26).

## Patentanspruch

Getriebeeinheit für ein Motorfahrzeug mit Frontantrieb mit einem Getriebe mit permanent in Eingriff stehenden Zahnrädern, die transversal zu der Longitudinalachse des Fahrzeugs angeordnet sind und mit einem epizyklischen Differential (34), wobei das Getriebe und das Differential zwischen dem Motor und dem Paar der vorderen Antriebswellen (12) des Motorfahrzeugs angeordnet sind und wobei das Getriebe enthält:

eine Hauptwelle (14), die von dem Motor angetrieben wird und auf der Vorwärtsgangzahnräder und ein Rückwärtsgangzahnrad (20) festgekeilt sind,

eine Abtriebswelle (22), die parallel zu der Hauptwelle (14) angeordnet ist und auf der drehbar eine Anzahl von Vorwärtsgangzahnrädern befestigt sind, deren Zahl den Zahnrädern entspricht, die auf der Hauptwelle (14) festgekeilt sind, mit denen sie in Eingriff stehen, des weiteren sind auf der Abtriebswelle (22) drehbar befestigt, ein Rückwärtsgangzahnrad (32) das mit dem Rückwärtsgangzahnrad (20) der Hauptwelle (14) durch ein verschiebbares Leergangzahnraad in Eingriff steht und Endreduzierzahnräder,

Endreduzierzahnräder, die am Gehäuse (36) des Differentials (34) befestigt sind und mit den Endreduzierzahnrädern, die auf der Abtriebswelle (22) befestigt sind, in Eingriff stehen, und

Kupplungshülsenmittel (28), die verschiebbar mit der Abtriebswelle (22) gekuppelt sind, um wahlweise eines der Vorwärtsgangzahnräder, die mit den auf der Hauptwelle (14) festgekeilten Vorwärtsgangzahnrädern in Eingriff stehen, mit der Abtriebswelle (22) für eine Drehbewegung zu kuppeln,

gekennzeichnet dadurch,

daß die Vorwärtsgangzahnräder aus einem einzelnen Paar von Zahnrädern (16, 18) auf der Hauptwelle (14) und durch ein entsprechendes einzelnes Paar (24) von Zahnrädern (24a, 24b) auf der Abtriebswelle (22) gebildet sind,

daß die Endreduzierzahnräder aus einem Paar (26) von Endreduzierzahnrädern (26a, 26b), die drehbar von der Abtriebswelle (22) getragen werden und einem Paar von entsprechenden Endreduzierzahnrädern (44, 48), die am Gehäuse (36) des Differentials (34) befestigt sind, gebildet sind,

daß die Kupplungshülsenmittel der Abtriebswelle (22) aus einer Hülse (28) bestehen, die durch Wirkverbindung mit dem einzelnen Paar von Vorwärtsgangzahnrädern (24a, 24b) verbunden ist

und daß eine zweite Kupplungshülse (30) verschiebbar mit der Abtriebswelle (22) gekuppelt ist, um damit wahlweise eines der Zahnräder (26a, 26b) des Endreduzierpaares (26) mit der Abtriebswelle (22) für eine Drehbewegung zu kuppeln.

**Revendication**

Système de transmission pour véhicule automobile à traction avant comportant une boîte de vitesses à pignons constamment en prise disposées transversalement à l'axe longitudinal du véhicule et un différentiel épicyclique (34), la boîte de vitesses et le différentiel étant interposés entre le moteur et la paire d'arbres moteurs avant (12) du véhicule automobile, cette boîte de vitesses comportant:

un arbre principal (14) qui est entraîné par le moteur et sur lequel sont clavetés des pignons de marche avant et un pignon de marche arrière (20),

un arbre entraîné (22) qui est parallèle à l'arbre principal (14) et sur lequel sont montés à rotation un nombre de pignons de marche avant égal à celui des pignons clavetés sur l'arbre principal (14) et en prise avec celui-ci, un pignon de marche arrière (32) destiné à venir en prise avec ledit pignon de marche arrière (20) sur l'arbre principal (14) par l'intermédiaire d'un pignon libre coulissant, et un moyen à pignon de réduction finale monté sur ledit arbre entraîné (22),

un moyen à pignon de réduction finale fixé sur le boîtier (36) du différentiel (34) et venant en prise avec le moyen à pignon de réduction finale monté sur l'arbre entraîné (22), et

un moyen à manchon de couplage (28) couplé de façon coulissante à l'arbre entraîné (22) pour coupler sélectivement en vue de sa rotation avec l'arbre entraîné (22), l'un des pignons de marche avant en prise avec les pignons de marche avant clavetés sur l'arbre principal (14),

caractérisé en ce que:

les pignons de marche avant sont constitués par une paire unique de pignons (16, 18) se trouvant sur l'arbre principal (14) et par une paire unique correspondante (24) de pignons (24a, 24b) se trouvant sur l'arbre entraîné (22),

le moyen à pignon de réduction finale comprend une paire (26) de pignons de réduction finale (26a, 26b) montés tournant sur l'arbre entraîné (22) et une paire de pignons de réduction finale correspondant (44, 48) fixés au boîtier (36) du différentiel (34),

le moyen à manchon de couplage de l'arbre entraîné (22) est constitué d'un manchon unique (28) fonctionnellement associé à ladite paire unique de pignons de marche avant (24a, 24b),

un second manchon de couplage (30) est couplé de façon coulissante à l'arbre entraîné (22) pour coupler de façon sélective en vue de sa rotation avec celui-ci l'un desdits pignons (26a, 26b) de la paire de réduction finale (26).